# DEMANDE DE BREVET EUROPEEN

(11) **EP 0 662 377 A1**
(43) Date de publication de la demande: **12.07.1995**
(21) Numéro de dépôt: 94440072.0
(22) Date de dépôt: 15.11.1994
(51) Int. Cl.: B27N 7/00, B29C 33/42

(54) **Dispositif et procédé pour améliorer la soudure et l'acoustique au niveau des zones de contact pour des panneaux en fibres de bois revêtus de tissu, et panneau ainsi obtenu**

(30) Priorité: 11.01.1994 FR 9400442
(71) Demandeur: EMAIREL (S.A.), F-67240 Bischwiller (FR)
(72) Inventeur: Wendling, Pierre, F-67590 Schweighouse sur Moder (FR)
(74) Mandataire: Nuss, Pierre

(57) **Abrégé**

La présente invention concerne un procédé d'amélioration de la tenue de la soudure du rembordement et de l'acoustique au niveau des zones de contact sur des panneaux d'habillage rigides en fibres de bois munis d'un revêtement en tissu, un dispositif pour la mise en oeuvre de ce procédé et le panneau ainsi obtenu.

Procédé caractérisé en ce qu'il consiste essentiellement à réaliser sur au moins une partie de la face de rembordement (4) de chaque bord et sur le pourtour des traversées de passage (9) de pièces de fixation, de manoeuvre ou autres, un grainage (5) augmentant, lors du soudage du tissu de revêtement (3), la surface de liaison entre le tissu (3) et ledit bord et au niveau des traversées de passage (9) et améliorant l'acoustique.

## Description

La présente invention concerne le domaine de la fabrication des panneaux d'habillage rigides en fibres de bois munis d'un revêtement en tissu et a pour objet un procédé d'amélioration de la tenue de la soudure du rembordement et de l'acoustique au niveau des zones de contact sur de tels panneaux.

L'invention a également pour objet un dispositif pour la mise en oeuvre de ce procédé et un panneau ainsi obtenu.

Actuellement, les panneaux d'habillage rigides en fibres de bois munis d'un revêtement en tissu sont généralement réalisés par formage préalable dans un moule à chaud du panneau de support, qui est enduit ensuite, par trempage, d'un adhésif d'apprêt. Après séchage, les panneaux de support sont munis chacun, dans une opération indépendante, d'un revêtement en tissu soudé par haute fréquence.

Un tel soudage donne satisfaction en ce qui concerne l'accrochage de surface, mais, cependant, la fixation sur le rembordement est souvent déficiente, de sorte qu'un décollement de la partie de tissu rembordée reste possible, ce qui est incompatible avec une fabrication en grande série, en particulier dans le domaine de la construction automobile.

En effet, dans un tel cas il est impératif que la fixation soit parfaitement assurée pour tous les panneaux, afin d'éviter toute reprise ultérieure qui serait préjudiciable à un processus de fabrication en continu.

Actuellement, il est remédié à cet inconvénient par la prévision, après l'opération de soudage du tissu, d'une opération d'agrafage du rembordement sur la face arrière des panneaux.

Une telle opération présente, toutefois, l'inconvénient de devoir être accomplie manuellement, ce qui obère de manière importante le cycle de fabrication et entraîne une augmentation correspondante du coût des panneaux.

En outre, les caractéristiques acoustiques des assemblages entre tôles et panneaux sont relativement médiocres, du fait d'une transmission importante des vibrations au niveau des zones de contact, d'une part, entre les bords des panneaux et les tôles et, d'autre part, entre les panneaux et les pièces de fixation, de manoeuvre ou autres.

La présente invention a pour but de pallier ces inconvénients.

Elle a, en effet, pour objet un procédé d'amélioration de la tenue de la soudure du rembordement et de l'acoustique au niveau des zones de contact sur des panneaux d'habillage rigides en fibres de bois munis d'un revêtement en tissu caractérisé en ce qu'il consiste essentiellement à réaliser sur au moins une partie de la face de rembordement de chaque bord et sur le pourtour des traversées de passage de pièces de fixation, de manoeuvre ou autres, un grainage augmentant, lors du soudage du tissu de revêtement, la surface de liaison entre le tissu et ledit bord et au niveau des traversées et améliorant l'acoustique.

L'invention a également pour objet un dispositif pour la mise en oeuvre de ce procédé caractérisé en ce qu'il est essentiellement constitué par un moule de formage comportant une bande de marquage le long de tout ou partie de ses bords, ainsi qu'autour des reliefs correspondant aux traversées de passage de pièces de fixation, de manoeuvre ou autres.

Enfin, l'invention a également pour objet un panneau, obtenu par mise en oeuvre du procédé précité au moyen de ce dispositif, caractérisé en ce qu'il est pourvu, sur au moins une partie de la face de rembordement de chaque bord, ainsi que sur le pourtour des traversées de passage de pièces de fixation, de manoeuvre ou autres, d'un grainage augmentant, lors du soudage du tissu de revêtement, la surface de liaison entre le tissu et ledit bord et au niveau des traversées et améliorant l'acoustique.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un panneau obtenu par mise en oeuvre du procédé conforme à l'invention ;
la figure 2 est une vue en perspective d'un dispositif pour la mise en oeuvre du procédé conforme à l'invention, et
la figure 3 est une vue partielle en élévation latérale et en coupe, à plus grande échelle, du bord d'un panneau.

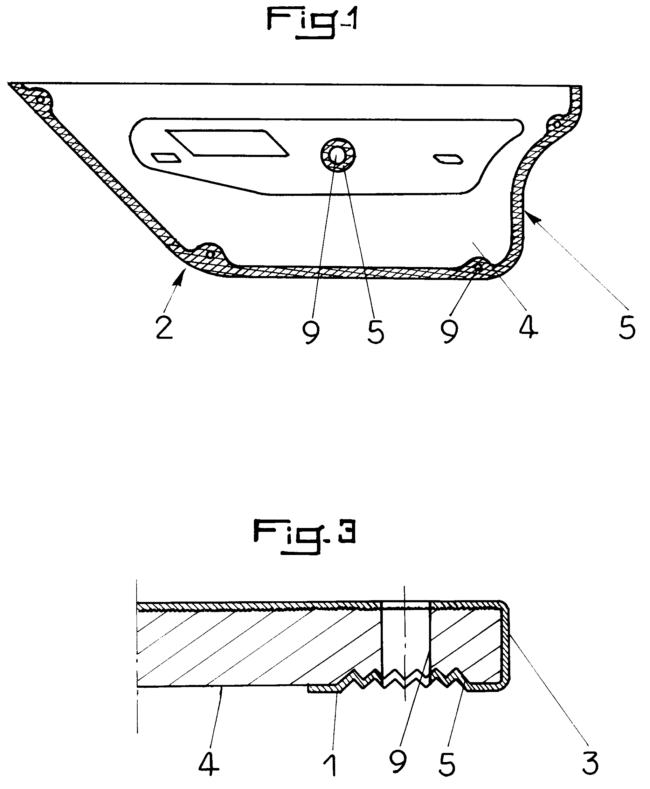

Conformément à l'invention, et comme le montrent plus particulièrement, à titre d'exemple, les figures 1 à 3 des dessins annexés, le procédé d'amélioration de la tenue de la soudure du rembordement 1 et de l'acoustique au niveau des zones de contact sur des panneaux d'habillage rigides 2 en fibres de bois munis d'un revêtement en tissu 3 consiste essentiellement à réaliser sur au moins une partie de la face de rembordement 4 de chaque bord et sur le pourtour des traversées de passage 9 de pièces de fixation, de manoeuvre ou autres, un grainage 5 augmentant, lors du soudage du tissu de revêtement 3, la surface de liaison entre le tissu 3 et ledit bord et au niveau des traversées et améliorant l'acoustique.

Le grainage 5 réalisé sur chaque bord de la face de rembordement 4 et sur le pourtour des traversées de passage 9 de pièces de fixation, de manoeuvre ou autres permet l'obtention, le long de la périphérie de ladite face de rembordement 4 et autour des traversées de passage 9 de pièces de fixation, de manoeuvre ou autres, d'un état de surface rugueux comparable à celui du côté grainé d'origine du panneau 1, de sorte que, lors du soudage haute fréquence, le rembordement 1 est appliqué sur le grainage 5 et que sa matière s'insère dans les interstices délimités dans ledit grainage 5, ce qui entraîne une amélioration de la liaison du rembordement 1 avec le bord correspondant de la face de rembordement 4 et une diminution de la surface de contact des différentes zones de contact, à savoir les bords et le pourtour des traversées 9. Ainsi, l'invention permet de réaliser sur les bords de la face de rembordement 4 un état de surface rugueux comparable à celui existant sur la face du panneau 1 destinée à recevoir le tissu de revêtement 3, cet aspect rugueux étant également obtenu au niveau des traversées de passage 9 et permettant, du fait de la diminution des surfaces de contact disponibles entre le panneau et les tôles ou autres pièces, une réduction des vibrations transmises et donc une amélioration de l'acoustique.

En effet, ces panneaux sont réalisés, de manière connue, en fibres de bois comprimées au moyen d'une presse sur une toile métallique tissée, de sorte qu'ils présentent une surface rugeuse de contact avec la toile métallique et une surface parfaitement lisse de contact avec le poinçon de la presse, cette dernière n'offrant qu'une adhérence médiocre au tissu rembordé lors du soudage, alors ique les multiples reliefs existant sur l'autre face favorisent l'accrochage du tissu après soudage. Le procédé conforme à l'invention permet d'obvier à cet inconvénient.

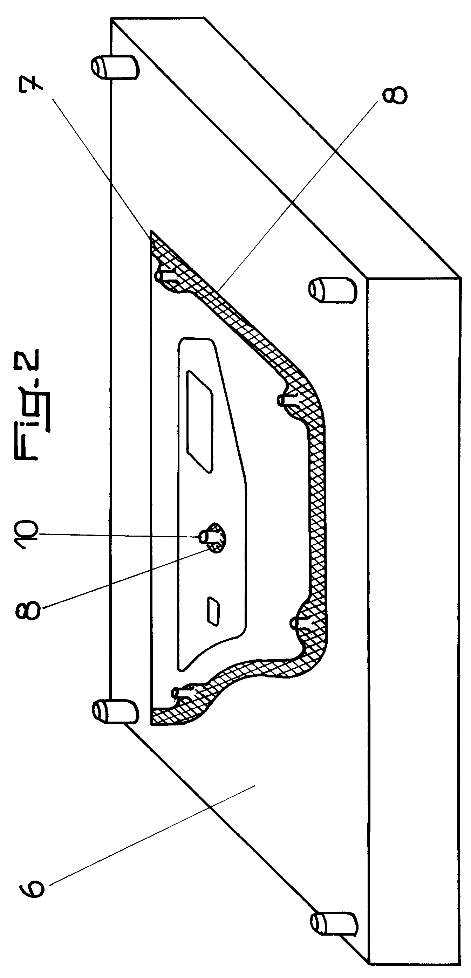

L'invention a également pour objet, comme le montre plus particulièrement la figure 2 du dessin annexé, un dispositif pour la mise en oeuvre du procédé décrit ci-dessus, qui est essentiellement constitué par un moule de formage 6 comportant une bande de marquage 7 le long de tout ou partie de ses bords 8, ainsi qu'autour des reliefs 10 correspondant aux traversées de passage 9 de pièces de fixation, de manoeuvre ou autres.

La bande de marquage 7 est avantageusement sous forme d'une gravure en relief des bords 8 et du pourtour des reliefs 10 correspondant aux traversées de passage de pièces de fixation, de manoeuvre ou autres, cette gravure étant constituée par des rainures longitudinales ou transversales, par un moletage, par un gaufrage ou une autre figure géométrique.

La gravure du marquage 7 est une opération relativement simple et peu onéreuse, de sorte que le prix de revient du dispositif conforme à l'invention est sensiblement comparable à celui d'un moule de type connu.

Pour le moulage du panneau, le flan prédécoupé de fibres de bois compressées est introduit dans le moule de formage 6 avec sa face rugueuse tournée vers le poinçon, de sorte que les bords de sa face de rembordement 4 et le pourtour des traversées 9 reposent sur la bande de marquage 7 prévue sur tout ou partie des bords 8 du moule et au niveau du pourtour des reliefs 10 correspondant aux traversées de passage 9 de pièces de fixation, de manoeuvre ou autres. Lors du formage, le poinçon comprime et déforme le flan, afin de lui conférer sa forme définitive, et réalise simultanément, au niveau du marquage 7, le grainage 5 des bords de la face de rembordement 4 et du pourtour des traversées de passage 9 de pièces de fixation, de manoeuvre ou autres. Il en résulte l'obtention sur lesdits bords d'un relief pouvant épouser intimement, lors du soudage du tissu de revêtement 3, la face arrière de ce dernier, de sorte que la largeur développée des surfaces de rembordement en contact est largement supérieure à celle du rembordement de tissu proprement dit et que le soudage est notablement amélioré (figure 3). En outre, du fait de ce relief, les surfaces de contact avec les tôles ou sur les pourtours des traversées 9 de passage de pièces de fixation, de manoeuvre ou autres sont réduites, de sorte que la transmission des vibrations est réduite dans une mesure identique et que les qualités acoustiques des ensembles obtenus sont améliorées.

L'invention a également pour objet un panneau obtenu par mise en oeuvre du procédé précité au moyen du dispositif suivant la figure 2, caractérisé en ce qu'il est pourvu, sur au moins une partie de la face de rembordement 4 de chaque bord, ainsi que sur le pourtour des traversées de passage 9 de pièces de fixation, de manoeuvre ou autres, d'un grainage 5 augmentant, lors du soudage du tissu de revêtement 3, la surface de liaison entre le tissu 3 et ledit bord et au niveau des traversées de passage 9 et améliorant l'acoustique. Un tel panneau présente un rembordement adhérent parfaitement sur les bords de la face 4 et des propriétés acoustiques améliorées, du fait de la diminution des surfaces de contact entre le panneau habillé et ses supports. En effet, du fait de la rugosité du grainage 5, il résulte, d'une part, une augmentation notable des surfaces en contact, à savoir du tissu et du panneau, ce qui entraîne une soudure plus efficace et, d'autre part, une réduction des surfaces de panneau habillé en contact avec des tôles ou d'autres supports.

Des essais en laboratoire ont permis de constater, à données égales, une augmentation de la tenue à l'arrachement de l'ordre de 30 % à 40 % et une augmentation substantielle des qualités acoustiques des ensembles tôles et habillages réalisés avec cesdits panneaux.

Grâce au procédé et au dispositif conformes à l'invention, il est possible de réaliser des panneaux en fibres de bois à munir d'un revêtement en tissu, dont le rembordement peut être parfaitement maintenu après soudage sans nécessiter un agrafage ultérieur, de sorte que leur prix de revient peut être fortement réduit.

Par ailleurs, ces panneaux permettent une réduction sensible de la transmission des vibrations, ce qui entraîne une importante amélioration de l'acoustique des ensembles de portières, ou autres, réalisés.

En outre, la réalisation des panneaux et notamment du grainage 5, est particulièrement simple et rapide, ledit grainage étant effectué en opération cachée, de sorte que leur prix de revient est sensiblement identique à celui des panneaux existants.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé d'amélioration de la tenue de la soudure du rembordement (1) et de l'acoustique au niveau des zones de contact sur des panneaux d'habillage rigides (2) en fibres de bois munis d'un revêtement en tissu (3) caractérisé en ce qu'il consiste essentiellement à réaliser sur au moins une partie de la face de rembordement (4) de chaque bord et sur le pourtour des traversées de passage (9) de pièces de fixation, de manoeuvre ou autres, un grainage (5) augmentant, lors du soudage du tissu de revêtement (3), la surface de liaison entre le tissu (3) et ledit bord et au niveau des traversées de passage (9) et améliorant l'acoustique.

2. Dispositif pour la mise en oeuvre du procédé suivant la revendication 1, caractérisé en ce qu'il est essentiellement constitué par un moule de formage (6) comportant une bande de marquage (7) le long de tout ou partie de ses bords (8) et sur le pourtour des reliefs (10) correspondant aux traversées de passage (9) de pièces de fixation, de manoeuvre ou autres.

3. Dispositif, suivant la revendication 2, caractérisé en ce que la bande de marquage (7) est avantageusement sous forme d'une gravure en relief des bords (8) et du pourtour des reliefs (10) correspondant aux traversées de passage (9) de pièces de fixation, de manoeuvre ou autres, cette gravure étant constituée par des rainures longitudinales ou transversales, par un moletage, par un gaufrage ou une autre figure géométrique.

4. Panneau obtenu par mise en oeuvre du procédé suivant la revendication 1 au moyen du dispositif suivant l'une quelconque des revendications 1 et 2, caractérisé en ce qu'il est pourvu, sur au moins une partie de la face de rembordement (4) de chaque bord, ainsi que sur le pourtour des traversées de passage (9) de pièces de fixation, de manoeuvre ou autres, d'un grainage (5) augmentant, lors du soudage du tissu de revêtement (3), la surface de liaison entre le tissu (3) et ledit bord et au niveau des traversées de passage (9) et améliorant l'acoustique.
